# EUROPÄISCHE PATENTSCHRIFT

(11) **EP 3 132 513 B1**
(45) Veröffentlichungstag und Bekanntmachung des Hinweises auf die Patenterteilung: **20.11.2019**
(21) Anmeldenummer: 15717093.7
(22) Anmeldetag: 09.04.2015
(51) Int. Cl.: H02G 3/04, H01B 11/06, H01B 7/00

(54) **KABELANORDNUNG**
CABLE ARRANGEMENT
ENSEMBLE DE CÂBLES

(30) Priorität: 16.04.2014 DE 202014003291 U
(43) Veröffentlichungstag der Anmeldung: 22.02.2017
(73) Patentinhaber: Rosenberger Hochfrequenztechnik GmbH & Co. KG, 83413 Fridolfing (DE)
(72) Erfinder: KUNZ, Stephan, 83339 Chieming (DE); MÜLLER, Thomas, 83471 Berchtesgaden (DE); ARMBRECHT, Gunnar, 84453 Mühldorf (DE)
(74) Vertreter: Zeitler Volpert Kandlbinder Patent- und Rechtsanwälte Partnerschaft mbB
(86) Internationale Anmeldenummer: PCT/EP2015/000754
(87) Internationale Veröffentlichungsnummer: WO 2015/158421

(56) Entgegenhaltungen:
- EP-A2- 1 619 695
- EP-A2- 1 818 945
- JP-A- 2002 157 926
- JP-A- 2008 078 082
- US-A1- 2008 115 959
- US-A1- 2008 283 274
- US-B1- 6 342 678
- US-B1- 7 145 080

## Beschreibung

Die Erfindung betrifft eine Anordnung von mindestens zwei nebeneinander verlaufenden Kabeln, von denen ein erstes Kabel und ein zweites Kabel jeweils genau eine Verseilungsgruppe mit zwei oder mehr miteinander verseilten Leitern und jeweils einen die Verseilungsgruppe umgebenden gemeinsamen Kabelmantel aufweisen, wobei die Verseilungsgruppen jeweils aus einem verdrillten Leiterpaar bestehen und die Kabel jeweils Twisted-Pair-Kabel sind, oder wobei die Kabel jeweils Sternvierer-Kabel mit Viererverseilung sind, gemäß dem Oberbegriff von Anspruch 1.

Unter einer Verdrillung oder Verseilung wird allgemein das schraubenförmige Umeinanderwickeln mehrerer Adern bzw. Leiter eines Kabels verstanden. Beispielsweise weist ein bekanntes Twisted-Pair-Kabel zumindest eine Verseilungsgruppe auf, die zwei miteinander verdrillte Leiter umfasst. Dabei tauschen die einzelnen Leiter in Längsrichtung des Kabels periodisch ihren Platz zueinander aus. Zusätzlich bieten verdrillte bzw. verseilte Adernpaare einen besseren Schutz gegenüber äußeren elektromagnetischen Wechselfeldern und elektrostatischen Beeinflussungen.

Der gemeinsame Kabelmantel, der üblicherweise aus einem Dielektrikum wie etwa Kunststoff gebildet ist, umgibt die jeweils mit einer Einzelisolierung versehenen Leiter (die Adern) umlaufend.

Ferner kann durch eine Verseilung wirksam ein Übersprechen bzw. ein Crosstalk zwischen mehreren Leiterpaaren verringert werden, die nebeneinander in einem Kabel geführt werden. Dazu können zusätzlich die Schlaglängen und/oder der Drehsinn der einzelnen Verseilungsgruppen eines Kabels unterschiedlich gewählt werden. Die Einkopplung eines Fremdsignals eines ersten Leiterpaars in ein benachbartes zweites Leiterpaar kann induktiv oder kapazitiv erfolgen.

Auch wenn mehrere Kabel, die jeweils mindestens ein Leiterpaar zur Übertragung differentieller Signale aufweisen, nebeneinander verlegt werden, kann ein solches unerwünschtes Fremdübersprechen zwischen den Kabeln (auch Alien-Crosstalk genannt) auftreten. Um dieses Übersprechen zu verringern, werden die einzelnen Kabel regelmäßig mit einer Schirmung versehen. Alternativ werden Koaxialkabel verwendet.

Die Druckschrift US 2012/0186846 sieht vor, mehrere Verseilungsgruppen in einem Kabel anzuordnen, wobei die Verseilungsgruppen wiederum miteinander verseilt sein können. Die Schlaglängen der einzelnen Verseilungen können variierend eingerichtet sein. Die Herstellung eines solchen Kabels ist allerdings besonders komplex. Ferner kann Alien-Crosstalk zwischen mehreren solchen Kabeln auftreten, die nebeneinander verlegt sind.

Die Druckschrift EP 2 131 370 B1 sieht ebenfalls vor, zwei Verseilungsgruppen wiederum miteinander zu verseilen, wobei die Schlaglänge der Gruppenverseilung sinusförmig variiert. Auch dieses Kabel ist komplex in der Herstellung. Ferner kann Alien-Crosstalk zwischen mehreren solchen Kabeln auftreten, die nebeneinander verlegt sind. Unter der Schlaglänge wird die Steigung bzw. die Ganghöhe der von der Verseilungsgruppe gebildeten Schraubenlinie verstanden. Mit anderen Worten ist die Schlaglänge diejenige Strecke, um die sich eine der verseilten Adern einer Verseilungsgruppe bei einer vollen Umdrehung in Längsrichtung des Kabels (z-Richtung) windet.

Aus der US 6 342 678 B1 ist ein Einzelkabel bekannt, welches mehrere voneinander elektrisch isolierte Leiterpaare derart enthält, dass ein Crosstalk zwischen verschiedenen Leiterpaaren begrenzt ist. Das Kabel weist eine zentrale, flexible Schnur auf. Die Leiterpaare sind innerhalb des einzelnen Kabels durch periphere Schnüre, welche ebenfalls flexibel und um die zentrale Schnur herum verteilt sind, voneinander getrennt. Die Anordnung ist von einem Mantel umschlossen.

Aus der EP 1 181 945 A2 ist ein Hochfrequenzkabel bekannt, welches mindestens ein verdrilltes Leiterpaar aufweist, welches zumindest einen Teil eines Kerns ausbildet. Der Kern ist von einem Mantel umschlossen. Der Mantel weist einen Querschnitt in Form eines Reuleaux-Polygons auf, wodurch ein vergrößerter Abstand zwischen den Leitern in dem Kabel erzielt werden soll. Weiterhin soll dies die Querschnittsfläche des Kabelmantels verringern, was den Materialbedarf reduziert.

In Anbetracht der beschriebenen Probleme ist es die Aufgabe der vorliegenden Erfindung, eine Anordnung mehrerer nebeneinander verlaufender Kabel bereitzustellen, die jeweils zur Übertragung differentieller Signale geeignet sind, wobei die Anordnung einfach herstellbar ist und gleichzeitig ein Crosstalk zwischen den Leiterpaaren der einzelnen Kabel zuverlässig verhindert oder zumindest minimiert wird.
Dabei soll vorzugsweise auf eine Schirmung der einzelnen Kabel verzichtet werden, die zum einen teuer ist und zum anderen das Gewicht und die Biegsamkeit und damit die Verlegbarkeit der Kabel negativ beeinflussen kann.

Diese Aufgabe wird durch eine Kabelanordnung gemäß Anspruch 1 gelöst. Vorteilhafte Weiterbildungen der Erfindung sind in den abhängigen Ansprüchen beschrieben.

Bei der erfindungsgemäßen Kabelanordnung der o.g. Art ist es erfinungsgemäß vorgesehen, dass zumindest einer der Kabelmäntel einen außen daran angeordneten Abstandhalter zum Vergrößern eines (Mindestabstands zwischen den Verseilungsgruppen der beiden Kabel aufweist.

Die einzelnen Kabel der Anordnung können derart nebeneinander angeordnet sein, dass sie zumindest abschnittweise mit seitlichen äußeren Begrenzungsflächen aneinander anliegen, wobei in diesem Fall der (kleinstmögliche) gegenseitige Abstand zwischen den beiden Verseilungsgruppen durch den Abstandhalter zumindest um ein Maß erhöht wird, das der radialen Dicke des Abstandhalters ausgehend von einer Außenfläche des Kabelmantels entspricht. Diese radiale Dicke des Abstandhalters kann dabei in Abhängigkeit von Parametern wie etwa der zu übertragenden Signalstärke, dem Kabelmanteldurchmesser, der Anzahl der verseilten Leiter pro Verseilungsgruppe, der Anzahl der Kabel der Kabelanordnung sowie deren gegenseitigem Verlauf (in einer Ebene oder in Form eines dreidimensionalen Bündels) derart eingerichtet sein, dass der Alien-Crosstalk zwischen den Verseilungsgruppen der einzelnen Kabel durch Erhöhung bzw. Bereitstellung des gegenseitigen Mindestabstands auf ein vorgegebenes Wunschmaß abgedämpft wird.

Erfindungsgemäß bevorzugt ist an jedem der Kabelmäntel außen ein Abstandhalter angeordnet. Mit anderen Worten weist jedes einzelne Kabel der Anordnung zumindest einen Abstandhalter auf, der außen an dem jeweiligen Kabelmantel befestigt sein kann. In diesem Fall wird der gegenseitige Abstands zwischen den beiden Verseilungsgruppen durch die Abstandhalter zumindest um ein Maß erhöht, das der doppelten radialen Dicke eines Abstandhalters bzw. der addierten radialen Dicke der beiden Abstandhalter entspricht. Unabhängig vom Verlauf der Einzelkabel kann dadurch verhindert werden, dass sich die Verseilungsgruppen näher kommen als ein vorgegebener Mindestabstand A.

Die Erfindung geht auf die Erkenntnis zurück, dass das Übersprechen zwischen benachbarten Verseilungsgruppen mit zunehmendem Abstand zwischen den Verseilungsgruppen geringer wird. Deshalb kann zwischen eng nebeneinander verlaufenden Verseilungsgruppen ein erheblicher, unerwünschter Alien-Crosstalk auftreten. Dieses Problem kann durch bekannte Maßnahmen wie etwa eine Variation der Verseilungslänge zwischen den einzelnen Verseilungsgruppen der Kabel allerdings ggf. nur unzureichend behoben werden. Es ist zwar denkbar, beim Verlegen herkömmlicher Kabel darauf zu achten, dass ein vorgegebener Mindestabstand zwischen den Kabeln eingehalten wird. Eine solche Vorgabe ist jedoch für den Kabelmonteur umständlich und zeitaufwändig. Besonders groß kann der unerwünschte Alien-Crosstalk im Falle eines Kabelbündels mit zahlreichen parallel zueinander verlaufenden Kabeln sein, da dabei jedes Kabel mehrere, ggf. eng angrenzende Nachbarkabel hat. Diese Schwierigkeiten können erfindungsgemäß durch den außen an den Kabeln angebrachten Abstandhalter behoben werden, da dieser sogar im Fall einer bündelförmigen Anordnung der Kabel einen vorgegebenen Mindestabstand zwischen einander nächst benachbarten Verseilungsgruppen sicherstellt.

Bei einer bevorzugten Ausführungsform der Erfindung ist der Abstandhalter in Form einer den Kabelmantel koaxial umlaufenden Hülse mit bevorzugt runder oder ovaler Außenkontur gebildet. Wenn die Hülse im Querschnitt eine runde Form hat, können mehrere jeweils von einer solchen Hülse umgebene Kabel in Form einer besonders dichten Kabelpackung bündelförmig verlegt werden, wobei die einzelnen Hülsen aneinander angrenzen können.

In einer ersten Alternative der Erfindung ist daran gedacht, außen am Kabel bzw. an jedem Kabel mehrere, in Längsrichtung des Kabels voneinander beabstandete Hülsen vorzusehen, die jeweils in Längsrichtung des Kabels eine nur kurze Abmessung wie etwa weniger als 10 cm haben. In einer besonders bevorzugten Alternative der Erfindung erstreckt sich die Hülse jedoch in Längsrichtung über eine weite Abmessung wie etwa mehr als 1 m, insbesondere 3 m oder mehr und ist ebenso wie das Restkabel biegsam, um über diesen gesamten Bereich sicherzustellen, dass sich die Verseilungsgruppen der Kabel nicht zu nahe kommen. Dabei hat es sich als zweckmäßig herausgestellt, dass sich die Hülse über mehr 30%, bevorzugt über mehr als 50%, besonders bevorzugt über mehr als 75%, insbesondere über die gesamte Länge des Kabels erstreckt, so dass ein Alien-Crosstalk zwischen den Kabel über die gesamte Kabellänge zuverlässig unterdrückt wird.

Als besonders zweckmäßig und kostengünstig herstellbar hat sich ein Abstandhalter in Form eines außen an dem Kabelmantel angeordneten zusätzlichen Kabelmantels erwiesen. Durch einen solchen zusätzlichen Kabelmantel wird praktisch der Gesamtdurchmesser der Einzelkabel erhöht. Der zusätzliche Kabelmantel kann kraft-und/oder formschlüssig außen an dem Kabelmantel befestigt sein, bspw. darauf aufgeschoben sein, und/oder formschlüssig daran angebracht wie etwa aufgeklebt oder aufgespritzt sein.

Als einfach verarbeitbares Material für den Abstandhalter hat sich ein nichtleitendes Material, bevorzugt ein Kunststoffmaterial und/oder ein Schaummaterial erwiesen. Ein Schaummaterial hat den Vorteil, dass der Durchmesser des Kabels durch einen Schaummantel bei nur begrenztem Materialeinsatz vergrößert werden kann, so dass der Abstand zwischen den Verseilungsgruppen ohne starke Gewichtserhöhung der Kabelanordnung deutlich vergrößert werden kann. Vorzugsweise besteht der Abstandhalter aus einem geschäumten Kunststoff wie etwa beispielsweise Polypropylen PP.

Im Hinblick auf eine zufriedenstellende Unterdrückung eines Übersprechens hat es sich als vorteilhaft herausgestellt, dass der Außendurchmesser des Abstandhalters mehr als 1,25 mal, insbesondere mehr als 1,5 mal so groß ist wie der Außendurchmesser des Kabelmantels.

Dabei kann der Außendurchmesser des Abstandhalters größer als 3,5 mm und kleiner als 10 mm sein, insbesondere größer als 4 mm und kleiner ist als 5 mm sein. Alternativ oder zusätzlich kann der Außendurchmesser des Kabelmantels größer als 2 mm und kleiner als 3,5 mm sein. Diese Abmessungen bieten einen vorteilhaften Kompromiss im Hinblick auf eine nur geringfügige Gewichtserhöhung der Kabelanordnung bei gleichzeitig zufriedenstellender Alien-Crosstalk-Unterdrückung.

Alternativ können die Verseilungsgruppen jeweils aus vier miteinander verseilten Leitern bestehen. Die Kabel können in diesem Fall jeweils Sternvierer-Kabel mit Viererverseilung sein.

Die vorteilhaften Wirkungen der Erfindung zeigen sich besonders deutlich, wenn jede Verseilungsgruppe mindestens ein Leiterpaar zur Übertragung eines differentiellen Signals aufweist. Solche nebeneinander verlaufenden Leiterpaare sind nämlich besonders anfällig für Alien-Crosstalk.

Eine erfindungsgemäße Kabelanordnung ist bei gleichzeitig kontrollierbarer Unterdrückung des Alien-Crosstalks zwischen den Verseilungsgruppen besonders einfach herstellbar, wenn jedes Kabel genau eine Verseilungsgruppe aufweist.

Die erfindungsgemäße Kabelanordnung ist vorzugsweise in Form eines mehr als zwei, insbesondere fünf oder mehr Kabel aufweisenden Kabelbündels gebildet, von denen zumindest ein Kabel nicht in der von zwei anderen Kabeln aufgespannten Ebene liegt. Zumindest ein Kabel kann dabei mehr als ein zumindest abschnittweise daran anliegendes Nachbarkabel aufweisen, bspw. zwei, drei oder vier Nachbarkabel. Dabei können jeweils die Außenflächen der Abstandhalter der jeweils benachbarten Kabel zumindest abschnittsweise unter Gewährleistung eines vergrößerten Mindestabstands zwischen den Verseilungsgruppen aneinander anliegen.

Bei einer bevorzugten Ausführungsform sind die mindestens zwei Kabel separate Einzelkabel, die vorzugsweise in Form eines Bündels aneinander angrenzend verlaufen. Alternativ oder zusätzlich können die Kabel zumindest abschnittsweise nebeneinander in Führungen geführt sein und/oder in einer gemeinsamen Halterung aufgenommen sein. Es ist nicht erforderlich, aber möglich, dass die Kabel über ihren gesamten Verlauf nebeneinander verlaufen. Sie können auch nur abschnittsweise parallel oder im Wesentlichen parallel zueinander verlaufen, wenn sie bspw. an einem Ende in einer gemeinsamen Steckleiste, Halterung o.dgl. aufgenommen sind. Als zusätzliche Maßnahme zur Unterdrückung des Alien-Crosstalks zwischen den Verseilungsgruppen können die Schlaglängen der einzelnen Verseilungsgruppen variierend eingerichtet sein. In diesem Zusammenhang wird insbesondere auf die deutsche Patentanmeldung mit dem Aktenzeichen 10 2014 000 897.5 verwiesen.

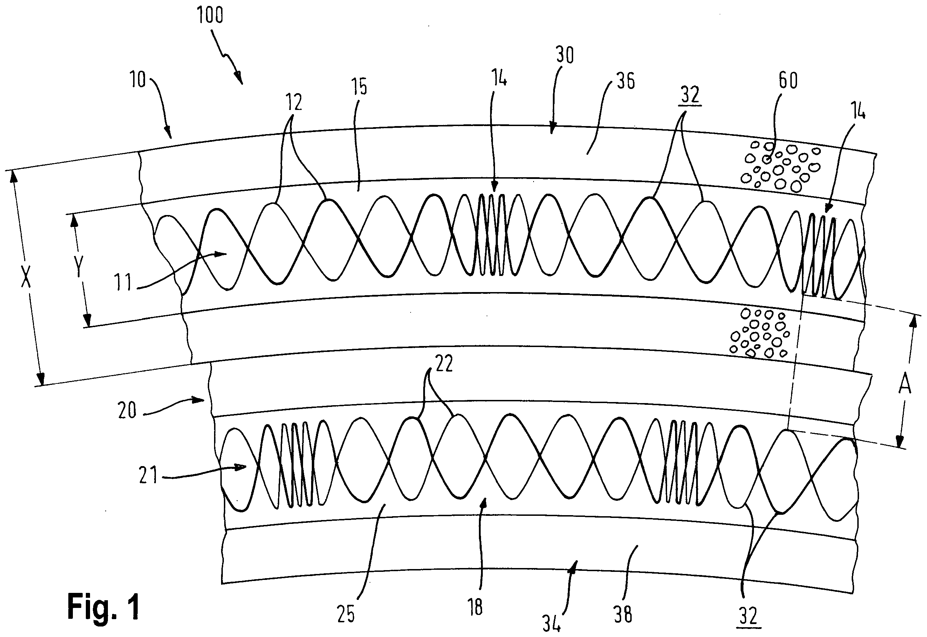

In der nun folgenden Beschreibung wird die Erfindung unter Bezugnahme auf die Zeichnung im Detail erläutert. Die einzige Figur der Zeichnung zeigt eine erfindungsgemäße Anordnung 100 aus zwei zumindest abschnittsweise nebeneinander verlaufenden Kabeln 10, 20 in einer schematischen Handskizze.

Es ist angedeutet, dass in jedem der Kabel 10, 20 zwei miteinander verseilte bzw. verdrillte und jeweils mit einer Isolierung (nicht gezeigt) versehene Leiter 32 (Adern) verlaufen. Zwei miteinander verseilte Adern bilden jeweils eine Verseilungsgruppe 11, 21. Mit anderen Worten sind die Adern einer Verseilungsgruppe schraubenförmig bzw. helixförmig umeinander gewickelt. Bei einer vollen Umdrehung bewegt sich jede der verseilten Adern um eine Schlaglänge in Längsrichtung des Kabels.

Das erste Kabel 10 ist ein Twisted-Pair-Kabel und umfasst genau eine Verseilungsgruppe 11, die zwei miteinander verdrillte Leiter 32 umfasst. Die Verseilungsgruppe 11 ist zur Bildung des Kabels 10 von einem Kabelmantel 15 aus einem isolierenden Material umgeben, wobei der Durchmesser Y des Kabelmantels etwa 3,2 mm beträgt. Andere Durchmesser sind alternativ möglich. Der Kabelmantel 15 ist von einem Abstandhalter 30 in Form eines zusätzlichen Kabelmantels 36 umgeben, der den inneren Kabelmantel 15 koaxial umläuft.

Das zweite Kabel 20 ist ebenfalls ein Twisted-Pair-Kabel und umfasst genau eine Verseilungsgruppe 21, die zwei miteinander verdrillte Leiter 32 umfasst. Die Verseilungsgruppe 21 ist von einem Kabelmantel 25 aus einem isolierenden Material umgeben. Der Kabelmantel 25 ist von einem Abstandhalter 34 in Form eines zusätzlichen Kabelmantels 38 umgeben, der den inneren Kabelmantel 25 koaxial umläuft.
Die Schlaglängen der Verseilungsgruppen 11, 21 der beiden Kabel 10, 20 variieren in der Längsrichtung der Kabel wellenartig zwischen einer minimalen Schlaglänge und einer maximalen Schlaglänge, so dass Verseilungsabschnitte minimaler Schlaglänge 14 und Verseilungsabschnitte maximaler Schlaglänge 18 gebildet sind. Hierdurch wird das Übersprechen zwischen den Verseilungsgruppen 11, 21 reduziert.

Die dargestellten Abschnitte der beiden Kabel 10, 20 sind eng nebeneinander verlegt, so dass die Außenseiten der zusätzlichen Kabelmäntel 36, 38 aneinander anliegen. Alternativ kann zumindest abschnittsweise ein Freiraum zwischen den beiden zusätzlichen Kabelmänteln 36, 38 vorhanden sein. Die eng aneinander anliegende Darstellung der beiden zusätzlichen Kabelmäntel 36, 38 wurde vorliegend gewählt, um den kleinsten möglichen Abstand A zwischen den beiden Verseilungsgruppen 11, 21 aufzuzeigen. Wie aus der Figur deutlich erkennbar ist, wird dieser kleinste mögliche Abstand A durch die beiden zusätzlichen Kabelmäntel 36, 38 um ein Maß vergrößert, das der addierten Dicke der beiden zusätzlichen Kabelmäntel 36, 38 entspricht. Je größer der Abstand A zwischen den beiden Verseilungsgruppen 11, 21 eingerichtet ist, desto wirksamer kann ein Alien-Crosstalk zwischen den mit den beiden Verseilungsgruppen 11, 21 zu übertragenden Signalen verringert werden.

In der dargestellten Ausführungsform beträgt der Durchmesser Y der Kabelmäntel 15, 25 jeweils etwa 3,2 mm, während der Durchmesser X der zusätzlichen Kabelmäntel 36, 38 zwischen vier und fünf Millimetern beträgt. Andere Abmessungen sind in Abhängigkeit von der zu erreichenden Verringerung des Übersprechens zwischen den Verseilungsgruppen 11, 21 möglich.

Die zusätzlichen Kabelmäntel 36, 38 bestehen jeweils aus einem geschäumten Kunststoff, der bei Bezugszeichen 60 durch Lufteinschlüsse angedeutet ist. Dies führt zu einem leichtgewichtigen Kabel trotz des vergrößerten Kabeldurchmessers Y. Die inneren Kabelmäntel 15, 25 bestehen dagegen aus einem herkömmlichen (ungeschäumten) Kunststoff.

Der zusätzliche Kabelmantel 36, 38 kann auch nachträglich auf den Kabelmantel 15, 25 eines vorhandenen Kabels aufgebracht werden, bspw. kann er auf den Kabelmantel 15, 25 aufgespritzt werden. Alternativ kann er manschettenartig auf den inneren Kabelmantel 15, 25 aufgeschoben oder von der Seite aufgesetzt werden.

Die zusätzlichen Kabelmäntel 36, 38 erstrecken sich über die gesamte Kabellänge, so dass über die gesamte Kabellänge eine Mindestabstand A zwischen den Verseilungsgruppen einander benachbarter Kabel 10, 20 sichergestellt ist.

Die Erfindung ist nicht auf das beschriebene Ausführungsbeispiel eingeschränkt. So können mehr als zwei jeweils nebeneinander verlaufende Kabel die erfindungsgemäße Anordnung bilden. Anstelle der Twisted-Pair-Kabel können Sternvierer-Kabel mit einer aus vier Adern gebildeten Verseilungsgruppe verwendet werden. Anstelle des zusätzlichen Kabelmantels kann eine starre Hülse oder ein anderer Abstandhalter vorgesehen sein, der nicht notwendigerweise über die gesamte Kabellänge verläuft.

### Bezuqszeichenliste

- 10: erstes Kabel
- 11: Verseilungsgruppe des ersten Kabels
- 12: verdrilltes Leiterpaar des ersten Kabels
- 15: Kabelmantel des ersten Kabels
- 14, 18: Verseilungsabschnitte
- 20: zweites Kabel
- 21: Verseilungsgruppe des zweiten Kabels
- 22: verdrilltes Leiterpaar des zweiten Kabels
- 25: Kabelmantel des zweiten Kabels
- 30: Abstandhalter des ersten Kabels
- 32: verseilte Leiter
- 34: Abstandhalter des zweiten Kabels
- 36: zusätzlicher Kabelmantel des ersten Kabels
- 38: zusätzlicher Kabelmantel des zweiten Kabels
- 60: Lufteinschlüsse
- 100: Kabelanordnung
- A: Abstand zwischen den Verseilungsgruppen
- X: Außendurchmesser des Abstandhalters
- Y: Außendurchmesser des Kabelmantels

## Patentansprüche

1. Anordnung (100) von mindestens zwei nebeneinander verlaufenden Kabeln (10, 20), von denen ein erstes Kabel (10) und ein zweites Kabel (20) jeweils genau eine Verseilungsgruppe (11, 21) mit zwei oder mehr miteinander verseilten Leitern (32) und jeweils einen die Verseilungsgruppe umgebenden gemeinsamen Kabelmantel (15, 25) aufweisen, wobei die Verseilungsgruppen jeweils aus einem verdrillten Leiterpaar (12, 22) bestehen und die Kabel jeweils Twisted-Pair-Kabel sind, oder wobei die Kabel jeweils Sternvierer-Kabel mit Viererverseilung sind,
**gekennzeichnet durch**
einen außen an zumindest einem der Kabelmäntel (15, 25) angeordneten Abstandhalter (30) zum Vergrößern eines Mindestabstands (A) zwischen den Verseilungsgruppen (11, 21) der beiden Kabel (10, 20).

2. Anordnung nach Anspruch 1, **dadurch gekennzeichnet, dass** an jedem der Kabelmäntel (15, 25) außen ein Abstandhalter (30, 34) angeordnet ist.

3. Anordnung nach Anspruch 1 oder 2, **dadurch gekennzeichnet, dass** der Abstandhalter (30, 34) eine den Kabelmantel (15, 25) koaxial umlaufende Hülse mit bevorzugt runder oder ovaler Außenkontur aufweist.

4. Anordnung nach Anspruch 3, **dadurch gekennzeichnet, dass** die Hülse über mehr als 30%, bevorzugt über mehr als 50%, besonders bevorzugt über mehr als 75%, insbesondere über die gesamte Länge des Kabels (10, 20) verläuft.

5. Anordnung nach Anspruch 3 oder 4, **dadurch gekennzeichnet, dass** der Abstandhalter ein außen an dem Kabelmantel (15, 25) angeordneter zusätzlicher Kabelmantel (36, 38) ist.

6. Anordnung nach einem der vorhergehenden Ansprüche, **dadurch gekennzeichnet, dass** der Abstandhalter (30, 34) aus einem nichtleitenden Material, bevorzugt aus einem Kunststoffmaterial und/oder aus einem Schaummaterial, insbesondere aus einem geschäumten Kunststoff wie etwa geschäumtem PP besteht.

7. Anordnung nach einem der vorhergehenden Ansprüche, **dadurch gekennzeichnet, dass** der Außendurchmesser (X) des Abstandhalters (30, 34) mehr als 1,25 mal, insbesondere mehr als 1,5 mal so groß ist wie der Außendurchmesser (Y) des Kabelmantels (15, 25).

8. Anordnung nach Anspruch 7, **dadurch gekennzeichnet, dass** der Außendurchmesser (X) des Abstandhalters (30, 34) größer ist als 3,5 mm und kleiner ist als 10 mm, insbesondere größer ist als 4 mm und kleiner ist als 5 mm und/oder der Außendurchmesser (Y) des Kabelmantels (15, 25) größer ist als 2 mm und kleiner ist als 3,5 mm.

9. Anordnung nach einem der vorhergehenden Ansprüche in Form eines mehr als zwei, insbesondere fünf oder mehr Kabel (10, 20) aufweisenden Kabelbündels, wobei bevorzugt nicht alle Kabel in derselben Ebene verlaufen.

## Claims

1. Arrangement (100) of at least two adjacently extending cables (10, 20), of which a first cable (10) and a second cable (20) each have exactly one stranding group (11, 21) which has two or more conductor (32) which are stranded together and each have a common cable sheath (15, 25) surrounding the stranding group, wherein the stranding groups in each case consists of a twisted conductor pair (12, 22) and/or that the cables are in each case twisted-pair cables, or wherein the cables are in each case star quad cables with quad stranding,
**characterised by**
a spacer (30) arranged on the outside of at least one of the cable sheaths (15, 25) in order to increase a minimum spacing (A) between the stranding groups (11, 21) of the two cables (10, 20).

2. Arrangement according to claim 1, **characterised in that** a spacer (30, 34) is arranged on the outside of each of the cable sheaths (15, 25).

3. Arrangement according to claim 1 or 2, **characterised in that** the spacer (30, 34) is a sleeve with preferably round or oval outer contour surrounding the cable sheath (15, 25) coaxially.

4. Arrangement according to claim 3, **characterised in that** the sleeve extends over more than 30%, preferably over more than 50%, particularly preferably over more than 75%, in particular over the entire length of the cable (10, 20).

5. Arrangement according to claim 3 or 4, **characterised in that** the spacer is an additional cable sheath (36, 38) arranged on the outside of the cable sheath (15, 25).

6. Arrangement according to one of the preceding claims, **characterised in that** the spacer (30, 34) is made of a non-conductive material, preferably of a plastic material and/or a foam material, in particular of a foamed plastic such as foamed PP.

7. Arrangement according to one of the preceding claims, **characterised in that** the outer diameter (X) of the spacer (30, 34) is more than 1.25 times, in particular more than 1.5 times as great as the outer diameter (Y) of the cable sheath (15, 25).

8. Arrangement according to claim 7, **characterised in that** the outer diameter (X) of the spacer (30, 34) is greater than 3.5 mm and less than 10 mm, in particular greater than 4 mm and less than 5 mm and/or the outer diameter (Y) of the cable sheath (15, 25) is greater than 2 mm and less than 3.5 mm.

9. Arrangement according to one of the preceding claims in the form of a cable bundle containing more than two, in particular five or more cables (10, 20), wherein preferably not all cables run in the same plane.

## Revendications

1. Ensemble (100) d'au moins deux câbles (10, 20) s'étendant l'un à côté de l'autre, dont un premier câble (10) et un second câble (20) présentent chacun exactement un groupe de câblage (11, 21) avec deux ou plusieurs conducteurs (32) câblés ensemble et une gaine de câble (15, 25) respective commune entourant le groupe de câblage, les groupes de câblage étant constitués chacun d'une paire de conducteurs torsadés (12, 22) et les câbles étant chacun des câbles à paires torsadées, ou les câbles étant chacun des câbles à quarte avec câblage en quarte,
**caractérisé par**
un écarteur (30) disposé à l'extérieur sur l'une au moins des gaines de câble (15, 25) pour augmenter une distance minimale (A) entre les groupes de câblage (11, 21) des deux câbles (10, 20).

2. Ensemble selon la revendication 1,
**caractérisé en ce que**
un écarteur (30, 34) est disposé à l'extérieur sur chacune des gaines de câble (15, 25).

3. Ensemble selon la revendication 1 ou 2,
**caractérisé en ce que**
l'écarteur (30, 34) comprend un manchon entourant coaxialement la gaine de câble (15, 25), de préférence avec un contour extérieur rond ou ovale.

4. Ensemble selon la revendication 3,
**caractérisé en ce que**
le manchon s'étend sur plus de 30 %, de préférence sur plus de 50 %, de manière particulièrement préférée sur plus de 75 %, en particulier sur la totalité de la longueur du câble (10, 20).

5. Ensemble selon la revendication 3 ou 4,
**caractérisé en ce que**
l'écarteur est une gaine de câble (36, 38) supplémentaire disposée à l'extérieur sur la gaine de câble (15, 25).

6. Ensemble selon l'une des revendications précédentes,
**caractérisé en ce que**
l'écarteur (30, 34) est constitué en un matériau non conducteur, de préférence en une matière plastique et/ou en un matériau en mousse, en particulier en une matière plastique moussée, telle que du PP moussé.

7. Ensemble selon l'une des revendications précédentes,
**caractérisé en ce que**
le diamètre extérieur (X) de l'écarteur (30, 34) est plus de 1,25 fois, en particulier plus de 1,5 fois plus grand que le diamètre extérieur (Y) de la gaine de câble (15, 25).

8. Ensemble selon la revendication 7,
**caractérisé en ce que**
le diamètre extérieur (X) de l'écarteur (30, 34) est supérieur à 3,5 mm et inférieur à 10 mm, en particulier supérieur à 4 mm et inférieur à 5 mm et/ou le diamètre extérieur (Y) de la gaine de câble (15, 25) est supérieur à 2 mm et inférieur à 3,5 mm.

9. Ensemble selon l'une des revendications précédentes sous la forme d'un faisceau de câbles comprenant plus de deux, en particulier cinq câbles (10, 20) ou plus, et de préférence les câbles ne s'étendent pas tous dans le même plan.
